# FASCICULE DE BREVET EUROPEEN

(11) **EP 2 222 444 B1**
(45) Date de publication et mention de la délivrance du brevet: **22.02.2012**
(21) Numéro de dépôt: 08862776.5
(22) Date de dépôt: 01.12.2008
(51) Int. Cl.: B25J 15/06, B25B 11/00

(54) **OUTILLAGE COMPACT A VENTOUSES POUR ROBOT DE MANIPULATION**
KOMPAKTES WERKZEUG MIT SAUGNÄPFEN FÜR HANDLING-ROBOTER
COMPACT TOOLS WITH SUCTION CUPS FOR HANDLING ROBOT

(30) Priorité: 04.12.2007 FR 0708452
(43) Date de publication de la demande: 01.09.2010
(73) Titulaire: Sidel Participations, 76930 Octeville Sur Mer (FR)
(72) Inventeur: MOUGIN, Didier, F-76930 Octeville-sur-mer (FR)
(74) Mandataire: Cabinet Plasseraud
(86) Numéro de dépôt international: PCT/FR2008/052170
(87) Numéro de publication internationale: WO 2009/077694

(56) Documents cités:
- EP-A- 0 603 395
- EP-A- 0 728 970
- EP-A- 1 308 633
- JP-A- 5 065 907
- JP-A- 2000 165 094
- US-A- 4 432 701
- US-A- 4 861 232

## Description

La présente invention concerne un outillage de préhension du type à ventouse(s) qui peut être fixé sur un robot pour la manipulation de produits en vue de leur mise en caisse, par exemple.

L'outillage actuel utilisé sur certaines machines d'encaissage de produits est constitué d'un support sur lequel sont généralement réparties plusieurs ventouses et ce support est fixé sur l'extrémité du bras d'un robot manipulateur.

Les ventouses sont reliées par des conduits souples à un générateur de vide unique qui se situe sur le bâti de la machine d'encaissage et parfois sur le robot.

Les outillages étant très lourds par rapport à la masse des produits à manipuler comme, par exemple, des sachets ou des poches, les robots actuels sont surdimensionnés par rapport à la charge utile à manipuler.

Des robots plus "légers" existent et ils sont aussi généralement très rapides mais ils ne peuvent pas être exploités au mieux de leurs capacités en raison, d'une part, du poids des outillages utilisés et, d'autre part, de leur capacité d'accélérations et de leur vitesse d'évolution.

En effet, cette rapidité dans les mouvements génère des accélérations qui deviennent vite problématiques, des accélérations peu compatibles avec le système de préhension des produits par ventouses.

L'efficacité de l'accrochage des produits dépend exclusivement de l'efficacité des ventouses et cette efficacité dépend notamment de la dépression et du taux de fuite qui règnent au niveau de chacune d'elles.

Lorsque l'une des ventouses lâche son produit, la dépression au niveau des autres ventouses devient globalement insuffisante et c'est tout le lot de produits qui se disperse.

L'alimentation des ventouses qui se situent à une certaine distance du ou des générateurs de vide s'effectue au moyen de conduites souples plus ou moins longues avec des pertes de charge. De plus, les conduites et raccords sont sujets à des phénomènes d'usure au contact des différents bras du robot et en particulier au niveau des articulations et, de ce fait, ils se dégradent et peuvent provoquer des incidents liés à la perte de dépression.

Il existe des dispositifs à ventouses, comme décrit dans le document US3716307, aménagés pour permettre de maintenir et de sécuriser la liaison entre le produit à manipuler et sa ventouse, en cas de perte de dépression.

Ce genre de dispositif est utilisé pour manoeuvrer des plaques de verre, par exemple, mais il n'est pas spécialement adapté pour équiper un robot qui fonctionne à grande cadence et pour servir de tête de préhension pour des emballages.

L'outillage selon US-A-3716307 comporte une cartouche greffée sous un corps comprenant, de façon intrinsèque, une chambre à vide ou est logé un générateur de vide, et un circuit interne reliant la chambre a vide et la ventouse.

Cet outillage simplifie les circuits d'alimentation des ventouses et il supprime une bonne partie des risques de détérioration. Cette simplification des circuits permet aussi de réduire considérablement les pertes de charge entre le générateur de vide et la ventouse.

Pour améliorer l'efficacité de la préhension des produits, qui sont relativement légers, l'invention propose un outillage selon la revendication 1.

L'outillage selon l'invention bénéficie d'une forte réduction de poids et il rend possible l'utilisation d'un robot léger, et par conséquent très rapide, pour la manipulation à grande vitesse de produits dont la taille et le poids sont modestes, quelques dizaines ou centaines de grammes. Avec l'outillage selon l'invention, le robot manipule une charge totale, comprenant ledit outillage et les produits à encaisser, qui est relativement faible, n'excédant pas 5 à 6 kg. Cet outillage permet d'améliorer les cadences d'encaissage, par exemple, et, surtout, il diminue, voire supprime, les risques d'incidents.

La conception sous forme de strates permet de réaliser, de façon simple, plusieurs modèles de l'outillage en question pour proposer un nombre variable de ventouses, de cartouches, tout en offrant aussi la possibilité de faire varier le nombre de ventouses alimentées par une seule cartouche.

Selon un mode préférentiel de l'invention, le bloc comporte quatre cartouches qui sont logées dans des forages dont les axes sont parallèles entre eux, situés dans un même plan, et les ventouses sont au nombre de quatre également, alimentées chacune de façon indépendante par une cartouche, lesquelles ventouses sont centrées dans deux plans parallèles qui sont perpendiculaires audit plan des axes desdites cartouches, chaque plan de ventouses étant situé, par exemple, dans le plan médian des cartouches qui alimentent respectivement lesdites ventouses.

Toujours selon ce mode préférentiel de l'invention, les forages d'accueil des différentes cartouches débouchent, d'un côté, dans une chambre commune d'arrivée de l'air comprimé qui alimente la partie amont des cartouches et, de l'autre côté, c'est-à-dire du côté de l'échappement, ils sont chacun obturés par un bouchon qui verrouille la cartouche correspondante dans son forage, lequel bouchon est muni d'ouvertures radiales, lesquelles ouvertures débouchent dans une chambre commune de détente garnie d'un matériau approprié qui permet l'atténuation du bruit d'échappement de l'air comprimé qui sort de chaque cartouche.

Mais l'invention sera encore détaillée à l'aide de la description suivante et des dessins annexés, donnés à titre indicatif, et dans lesquels :
- la figure 1 montre, sous forme de schéma fonctionnel, un outillage simplifié qui est constitué d'un bloc élémentaire réunissant la ventouse et son générateur de vide, lequel générateur se présente sous la forme d'une cartouche ;
- la figure 2 montre une cartouche couramment utilisée pour l'élaboration du vide au niveau des ventouses, laquelle cartouche est représentée en demi-vue externe et en demi-coupe longitudinale ;
- la figure 3 montre, en perspective, un outillage compact qui est constitué de plusieurs blocs élémentaires pour former une tête compacte, laquelle tête est, par exemple, installée sur un bras de robot manipulateur non représenté ;
- la figure 4 montre, en perspective, un mode de réalisation d'outillage selon l'invention, plus compact, réalisé en résine, par exemple ;
- la figure 5 est une vue de face de l'outillage représenté figure 4 ;
- la figure 6 est une coupe verticale de la figure 5, selon un plan vertical passant par l'axe d'une cartouche ;
- la figure 7 représente quatre coupes partielles selon 7-7 de la figure 5 pour montrer les différents aménagements du corps s monobloc constituant l'outillage.

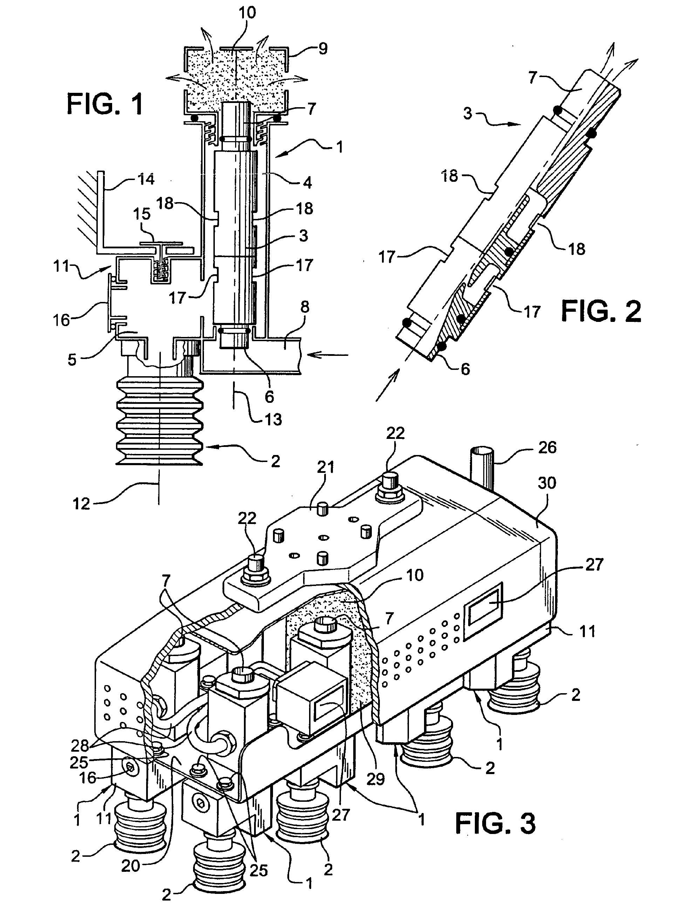

Les outillages selon les figures 1 et 3 ne sont pas des modes de réalisation de la présente invention.

La figure 1 représente un outillage que l'on peut qualifier d'outillage élémentaire. Cet outillage comprend :
- un corps 1 qui est constitué d'un bloc compact en matériau léger, du type matériau thermoplastique ou résine, lequel bloc est façonné par usinage et/ou par moulage et usinage,
- au moins une ventouse 2 qui est fixée sur ledit corps 1,
- un générateur de vide qui se présente sous la forme d'une cartouche 3, et ledit corps comporte des forages qui mettent en communication ladite cartouche 3 et ladite ventouse 2.

Ces forages constituent, d'une part, une chambre 4 à vide qui renferme la cartouche 3 et, d'autre part, un circuit interne ultra-court, en forme d'orifice ou de cavité 5, qui relie directement ladite chambre 4 à ladite ventouse 2.

La chambre 4 à vide s'étend, de façon étanche par l'intermédiaire de la cartouche 3, entre l'entrée et la sortie de ladite cartouche 3, laquelle entrée constitue l'embouchure 6 et la sortie est en forme de tuyère 7.

Cette embouchure 6 communique avec la chambre 8 d'arrivée de l'air comprimé et la tuyère 7 débouche dans une chambre 9 de détente, laquelle chambre 9 se présente sous la forme d'un chapeau percé qui est garni d'un matériau (10) absorbant du genre mousse, faisant office de silencieux.

La cartouche 3 est logée dans la partie allongée du corps 1 et la ventouse 2 est fixée sur une protubérance 11 qui comporte la cavité 5, laquelle protubérance est disposée sur le côté de cette partie allongée dudit corps 1 ; l'axe 12 de ladite ventouse 2 et l'axe 13 de la cartouche 3 sont parallèles.

Ce corps 1, constitué d'un bloc renfermant une cartouche 3 et muni d'une ventouse 2, forme un outillage élémentaire qui peut, par exemple, être fixé sur l'extrémité d'un bras 14 de robot manipulateur, au niveau de la protubérance 11, au moyen de vis 15.

La protubérance 11 comporte aussi un bouchon 16 qui obstrue l'extrémité de la cavité 5.

La figure 2 montre, de façon plus détaillée, la cartouche 3 qui alimente la ventouse 2. Cette cartouche, du type à deux étages de vide, se présente sous la forme d'un cylindre entre l'embouchure 6 et la tuyère 7 et ce cylindre est muni de deux couples d'orifices 17 et 18, chaque couple d'orifices correspondant à un étage de vide.

Ce type de cartouche 3 peut aussi alimenter deux ventouses 2 et même plus, selon le cas, disposées en étoile, par exemple, à travers plusieurs protubérances qui sont toutes reliées à la chambre 4 à vide.

La figure 3 montre une possibilité de réalisation d'un outillage compact qui est constitué de plusieurs corps 1, c'est-à-dire que chaque corps comporte une ventouse 2 et cette ventouse est alimentée par une cartouche 3 unique.

Les différents corps 1 sont réunis sur un socle 20 qui peut se fixer, au moyen d'une platine 21, sur le bras d'un robot, non représenté. Cette platine 21 se situe au-dessus du niveau de la partie supérieure des corps 1 et elle est reliée au socle 20 au moyen de supports 22 en forme de tiges filetées.

Ce socle 20 se présente sous la forme d'une tôle pliée et il comporte des perforations pour permettre le passage de la partie allongée supérieure des corps 1 et l'assemblage de ces derniers sur ledit socle s'effectue au moyen de vis 25 qui coopèrent avec les protubérances 11.

L'arrivée d'air comprimé au niveau de chaque corps 1 se situe sous le socle 20 et ces différentes arrivées sont reliées entre elles et elles sont alimentées par une arrivée commune au moyen de la tubulure 26 qui se situe, par exemple, à l'une des extrémités dudit socle 20.

Le socle 20 peut aussi servir de support à des instruments de contrôle de la dépression régnant au niveau des différentes ventouses 2. Deux vacuostats 27 sont représentés ; ils sont chacun reliés, au moyen de tubulures 28, aux différentes chambres 4 à vide des corps 1.

La partie supérieure des corps 1 laisse apparaître la tuyère 7 des cartouches 3 correspondantes, laquelle tuyère 7 se situe dans la chambre 29 de détente, laquelle chambre 29 est délimitée par un chapeau 30 dont le rôle est identique à celui du chapeau de la chambre 9 dont il a été question figure 1.

Ce chapeau 30 est perforé et il enveloppe un matériau 10, en mousse, qui fait office d'isolant acoustique, absorbant le bruit des différentes sorties 7 par lesquelles s'échappe l'air comprimé qui traverse les cartouches 3.

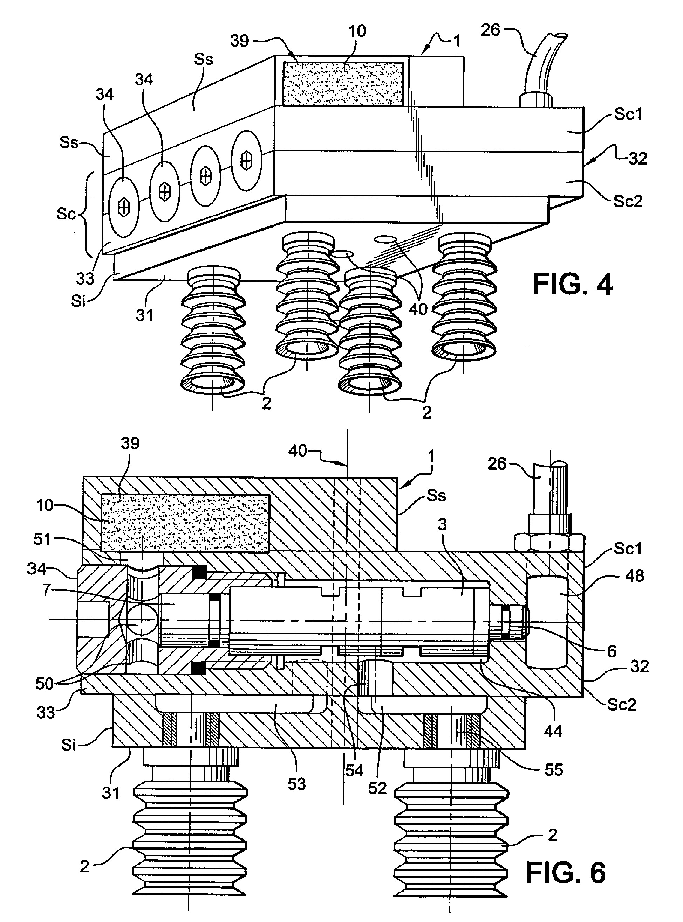

La figure 4 montre une forme de réalisation d'un outillage selon l'invention, particulièrement compact, qui comprend plusieurs ventouses 2 et cet outillage présente la particularité d'être constitué d'un corps 1 monobloc.

Ce corps 1 se présente sous la forme d'un bloc en matériau léger, du genre résine, matériau composite ou thermoplastique, qui est aménagé de façon à rassembler l'ensemble des équipements nécessaires à la préhension des produits et à faire fonctionner ces équipements de façon efficace en les reliant entre eux au moyen de circuits internes audit bloc, et en particulier de circuits ultra-courts.

Les ventouses 2 sont situées sur la surface 31 inférieure du corps 1 et ce corps 1 renferme plusieurs générateurs de vide en forme de cartouches qui alimentent directement les différentes ventouses 2 et, de préférence, chaque cartouche alimente une seule ventouse 2.

Ainsi, figure 4, le corps est représenté avec quatre ventouses 2 qui sont reliées, comme détaillé plus loin, avec quatre cartouches. Ces cartouches sont alimentées en air comprimé au moyen d'un conduit 26 unique qui se situe au niveau de la face 32 arrière du corps 1.

Les cartouches sont identiques à celles représentées figure 2 ; elles sont logées dans des forages borgnes, détaillés plus loin, qui débouchent sur la façade 33 du corps 1. Ces quatre forages sont obturés au niveau de cette façade 33 par quatre bouchons 34.

La partie supérieure du corps 1 comporte une cavité ouverte qui forme la chambre 39 de détente de l'air comprimé et en même temps elle fait office de silencieux au moyen d'un matériau 10, en mousse, qui garnit tout son volume. Cette chambre 39 est en communication avec la sortie de différentes cartouches par l'intermédiaire des bouchons 34.

Le corps 1 est réalisé en matériau composite, en matériau thermoplastique ou en résine. Il est constitué d'un assemblage de strates qui sont au nombre de trois ou quatre selon la forme des aménagements prévus qui seront détaillés sur les figures suivantes. Ces strates sont collées et, ensemble, elles forment le corps 1 monobloc.

Cette conception utilisant la stratification pour réaliser le corps 1 permet d'aboutir à un outillage compact, léger et surtout très sobre en ce sens qu'il ne comporte plus de conduites ni de raccords multiples.

La partie centrale du corps 1 peut être constituée d'une strate Sc, ou d'une paire de strates Sc1 et Sc2, qui comportent :
- les forages qui constituent les chambres 44 à vide des cartouches 3,
- l'aménagement de la chambre d'alimentation en air comprimé et,
- les différents circuits de liaison entre ces chambres 44 à vide avec, d'une part, les ventouses 2 et, d'autre part, la chambre 39 de détente. Le plan de séparation des strates Sc1 et Sc2 correspond au plan des axes des forages pour les cartouches 3.

La strate Si qui constitue la partie inférieure du corps 1 comporte les aménagements nécessaires à la fixation des ventouses 2 et le circuit interne qui permettent de raccorder les chambres 44 à vide avec leurs ventouses 2 respectives.

La strate Ss qui constitue la partie supérieure du corps 1 est façonnée autour de la chambre 39 de détente. Les strates Si, Sc, Ss, comportent deux ou trois orifices 40 verticaux qui sont alignés, lesquels orifices 40 sont disposés entre les cartouches 3 et ils permettent la fixation du corps 1 sur le bras du robot, non représenté.

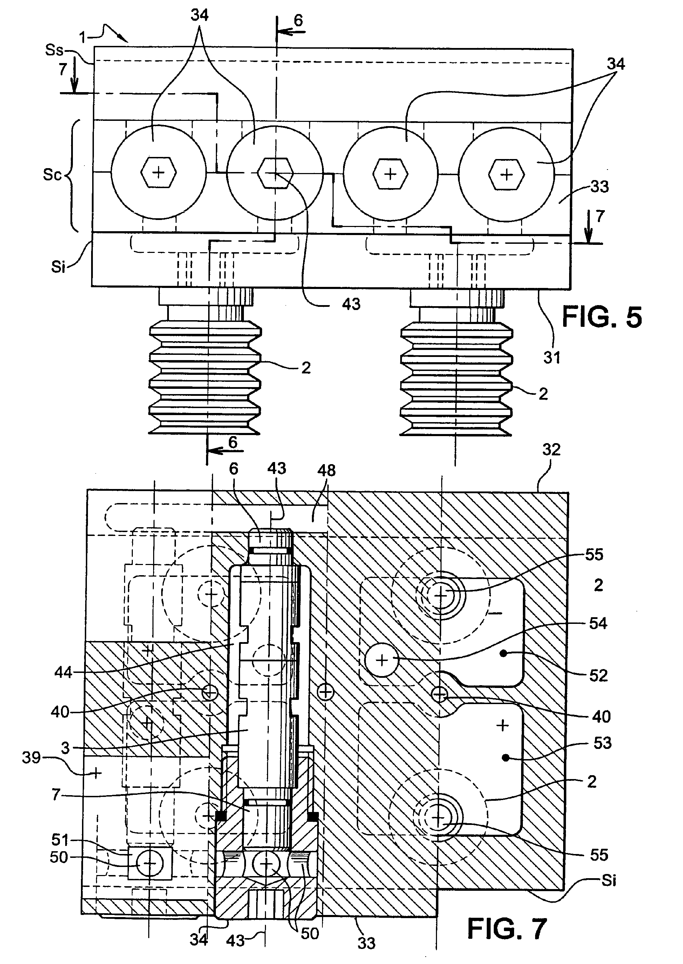

La figure 5 montre la façade 33 du corps 1 avec les bouchons 34 et les ventouses 2 ; elle montre surtout les coupes 6-6 et 7-7 qui sont détaillées figures 6 et 7 respectivement.

La figure 6 est une élévation d'une coupe faite au niveau d'une cartouche (3), comme indiqué figure 5. Le corps 1 apparaît sous une forme monobloc avec :
- sur sa face 31 inférieure : les ventouses 2,
- sur sa partie supérieure : la chambre 39 de détente,
- et, entre les deux, dans sa partie centrale : un forage qui fait office de chambre 44, dans laquelle est logée une cartouche 3.

Ce forage de la chambre 44 est horizontal par rapport aux ventouses 2 qui sont verticales, lesquelles ventouses sont, par exemple, disposées par paires, chaque paire se situant, comme montré notamment figure 5, dans le plan vertical médian qui s'étend entre les deux cartouches 3 d'alimentation desdites ventouses 2.

Le forage de la chambre 44 s'étend entre la chambre 48 où arrive l'air comprimé et le bouchon 34 qui ferme ledit forage. La cartouche 3 s'étend, de façon étanche, entre la chambre 48 et le bouchon 34, lequel bouchon est un bouchon fileté qui verrouille ladite cartouche dans la chambre 44 à vide.

Ce bouchon 34 comporte des forages 50 qui sont disposés radialement en bout du logement de la tuyère 7 de la cartouche 3. Ces forages 50 mettent la tuyère 7 de la cartouche 3 en communication avec la chambre 39 de détente par l'intermédiaire d'un orifice 51 aménagé entre les deux, dans le corps 1.

Toujours sur cette figure 6, on remarque les aménagements du circuit qui permet de réaliser la liaison entre la chambre 44 à vide des cartouches 3 et les ventouses 2.

Dans l'épaisseur du corps 1, entre les chambres 44 et les ventouses 2, on trouve des cavités et orifices ou forages. Les cavités 52 et 53 qui apparaissent figure 6 servent, respectivement, à alimenter les ventouses 2 avant et arrière. Ces cavités apparaissent également figure 7 ; elles s'étendent sous chaque groupe de deux cartouches et au-dessus des deux ventouses qu'elles alimentent. Ce sont ces cavités 52 et 53 qui font la jonction entre les orifices 54 qui partent de la chambre 44 et les orifices 55 qui accueillent les ventouses 2 au niveau de la surface 31 inférieure du corps 1.

Les orifices 54 sont situés dans le plan vertical médian de la cartouche 3 à laquelle ils sont associés alors que les orifices 55 se situent dans le plan médian des ventouses 2, entre les deux cartouches 3 qui alimentent ces ventouses.

La figure 7 donne un aperçu de l'architecture générale en plan du corps 1 avec des coupes réalisées à plusieurs niveaux.

La première coupe, sur la partie gauche du corps 1, montre la chambre 39 de détente et l'orifice 51 qui met le forage 50 du bouchon 34 en communication avec ladite chambre 39.

La seconde coupe est une coupe horizontale du corps 1 passant par l'axe 43 de la cartouche 3. Cette cartouche 3 s'étend entre la chambre 48 d'arrivée de l'air comprimé et les forages 50 aménagés dans le bouchon 34. Comme indiqué précédemment, le bouchon 34 est vissé dans le corps 1 et il verrouille la cartouche 3 dans son forage, de façon étanche.

La troisième coupe montre l'orifice 54 qui fait la liaison entre la chambre 44 à vide correspondante et la cavité 52, laquelle cavité met en communication ledit orifice 54 avec l'orifice 55 de la ventouse 2 correspondante.

La quatrième coupe, à droite sur la figure, montre les cavités 52 et 53 ainsi que les orifices 55 des deux ventouses 2 qui apparaissent en pointillés.

On remarque également sur cette figure 7, les orifices 40 qui traversent verticalement le corps 1 entre les cartouches 3, lesquels orifices 40 permettent la fixation dudit corps sur le robot manipulateur.

## Revendications

1. Outillage de préhension de produits relativement légers au moyen de ventouse(s), lequel outillage peut être fixé sur un robot manipulateur du type rapide et comprend des générateurs de vide sous forme de cartouches (3), des ventouses (2) et un corps (1) en forme de bloc compact en matériau approprié du genre matériau thermoplastique, composite ou résine, lequel corps (1) étant aménagé pour rassembler lesdites cartouches et lesdites ventouses, et pour installer un circuit interne ultra-court entre les deux, ledit corps (1) comportant :
- une chambre (48) d'arrivée de l'air comprimé pour l'alimentation globale des différentes cartouches (3),
- une chambre (39) de détente qui est commune auxdites cartouches et qui fait office de silencieux du côté de la sortie desdites cartouches
- des forages pour loger lesdites cartouches (3), chaque forage constituant une chambre (44) à vide et s'étendant, de façon étanche, par l'intermédiaire de la cartouche (3) correspondante, entre ladite chambre (48) d'arrivée de l'air comprimé et ladite chambre (39) de détente,
- le circuit interne qui relie lesdites chambres (44) à vide et les ventouses (2) correspondantes, ledit circuit étant constitué de plusieurs orifices et/ou cavités (52 à 55),
et ledit corps (1) étant constitué de strates préalablement façonnées puis assemblées, comprenant, de façon intrinsèque, les différentes chambres (39, 44, 48) et ledit circuit interne lesdites cartouches (3) étant disposées côte à côte, parallèles entre elles, et lesdites ventouses (2) se greffant sous ledit corps (1), perpendiculairement auxdites cartouches (3).

2. Outillage de préhension de produits selon la revendication 1, **caractérisé en ce que** le corps (1) comporte quatre cartouches (3) qui sont logées dans des forages dont les axes sont parallèles entre eux, situés dans un même plan, et les ventouses (2) sont au nombre de quatre également, alimentées chacune de façon indépendante par une cartouche (3), les axes desdites ventouses (2) étant perpendiculaires audit plan des axes desdites cartouches (3).

3. Outillage de préhension de produits selon la revendication 1, **caractérisé en ce qu'**il comporte, pour chaque forage aménagé pour accueillir les différentes cartouches (3), un organe d'obturation constitué d'un bouchon (34) qui est muni d'orifices (50) disposés radialement, lesquels orifices débouchent dans la chambre (39) commune de détente, laquelle chambre (39) est garnie d'un matériau (10) approprié, du genre mousse d'insolation acoustique, qui permet l'atténuation du bruit d'échappement de l'air comprimé qui sort de chaque cartouche (3).

## Claims

1. A tooling for holding relatively lightweight products using suction cup(s), which tooling can be fixed to a manipulating robot of the high-speed type and comprises vacuum generators which are in the form of cartridges (3), suction cups and a body (1) in the form of a compact block made of an appropriate material of the thermoplastic, composite or resin type, which body (1) being configured to combine said cartridges and suction cups, and for installing an ultra-short internal circuit between the two, said body (1) comprising:
- a compressed air inlet chamber (48) for the overall supply of all the various cartridges (3),
- an expansion chamber (39) which is common to said cartridges and which acts as a silencer on the outlet side of said cartridges
- bores to house said cartridges (3), each bore constituting a vacuum chamber (44) and extending, in a fluidtight manner, via the corresponding cartridge (3), between said compressed air inlet chamber (48) and said expansion chamber (39),
- the internal circuit which connects said vacuum chambers (44) and the corresponding suction cups (2), said circuit consisting of a plurality of orifices and/or cavities (52 to 55),
and said body (1) consisting of strata fashioned beforehand and then assembled and intrinsically comprising the various chambers (39, 44, 48) and said internal circuit, said cartridges (3) being arranged side by side and parallel to one another, and said suction cups (2) being grafted under said body (1), perpendicular to said cartridges (3).

2. The tooling for holding products as claimed in claim 1, **characterized in that** the body (1) comprises four cartridges (3) which are housed in bores the axes of which are mutually parallel, situated in the same plane, and the suction cups (2) are four in number also, each supplied independently of the others by one cartridge (3), the axes of said suction cups (2) being perpendicular to said plane of the axes of said cartridges (3).

3. The tooling for holding products as claimed in claim 1, **characterized in that** it comprises, for each bore designed to accommodate the various cartridges (3), a shut-off member consisting of a plug (34) which is provided with radially arranged orifices (50), which orifices open into the common expansion chamber (39), which chamber (39) is lined with an appropriate material (10), of the acoustic insulation foam type, which is able to deaden the noise of the escaping compressed air leaving each cartridge (3).

## Patentansprüche

1. Vorrichtung zum Greifen von relativ leichten Produkten mittels eines Saugers, die auf einem schnellen Robotermanipulator befestigt sein kann, und Vakuumerzeuger in Form von Einsätzen (3), Sauger (2) und einen kompakten blockförmigen Körper (1) aus einem geeigneten thermoplastischen, Verbund-oder-Harz Material, aufweist, wobei der Körper (1) zum Zusammenbringen der Einsätze und der Sauger eingerichtet ist und zum Einrichten eines ultrakurzen inneren Kreises zwischen den beiden, der Körper (1) mit:
- einer Einlasskammer (48) für verdichtete Luft zur gemeinsamen Versorgung der verschiedenen Einsätze (3),
- einer Expansionskammer (39), die den Einsätzen gemeinsam ist und die als Schalldämpfer der Ausgangsseite der Einsätze dient,
- Bohrungen zur Aufnahme der Einsätze (3), wobei jede Bohrung eine Vakuumkammer (44) bildet und sich abgedichtet über den jeweiligen Einsatz (3) zwischen der Einlasskammer (48) für verdichtete Luft und der Expansionskammer (39) erstreckt,
- dem inneren Kreis, der die Vakuumkammern (44) und die jeweiligen Sauger (2) verbindet, wobei der Kreis aus einer Vielzahl von Öffnungen und/oder Aussparungen (52 bis 55) gebildet ist,
und der Körper (1) aus vor der Montage bearbeiteten Lagen gebildet ist, und im Inneren die verschiedenen Kammern (39, 44, 48) und den inneren Kreis aufweist, und die Einsätze (3) Seite an Seite zueinander parallel angeordnet sind, und die Sauger (2) sich unter dem Körper (1) senkrecht zu den Einsätzen (3) befinden.

2. Vorrichtung zum Greifen von Produkten gemäß Anspruch 1, **dadurch gekennzeichnet, dass** der Körper (1) vier Einsätze (3) aufweist, die in Bohrungen aufgenommen sind, deren Achsen zueinander parallel sind und die in der gleichen Ebene angeordnet sind, und die Anzahl der Sauger (2) ebenfalls vier beträgt, die jeweils unabhängig über einen Einsatz (3) versorgt werden, wobei die Achsen der Sauger (2) senkrecht zu der Ebene der Achsen der Einsätze (3) sind.

3. Vorrichtung zum Greifen von Produkten gemäß Anspruch 1, **dadurch gekennzeichnet, dass** sie für jede Bohrung, die zur Aufnahme der verschiedenen Einsätze (3) ausgebildet ist, eine Verschlusseinrichtung aufweist, die aus einem Stopfen (34) gebildet ist, der mit radial angeordneten Öffnungen (50) versehen ist, wobei die Öffnungen in die gemeinsame Expansionskammer (39) münden und die Kammer (39) mit einem geeigneten Material (10) einer Art akustischen Isolationsschaums versehen ist, das das Dämpfen des Ausstoßgeräuschs der komprimierten Luft, die jedem Einsatz (3) entweicht, ermöglicht.
